# EUROPÄISCHE PATENTSCHRIFT

(11) **EP 3 125 691 B1**
(45) Veröffentlichungstag und Bekanntmachung des Hinweises auf die Patenterteilung: **06.03.2019**
(21) Anmeldenummer: 15712925.5
(22) Anmeldetag: 31.03.2015
(51) Int. Cl.: A01N 37/52, A01P 7/02, A01N 43/36, A01N 43/40, A01N 43/78, A01N 43/86, A01N 41/10

(54) **VERWENDUNG VON N-ARYLAMIDIN-SUBSTITUIERTEN TRIFLUORETHYLSULFOXID DERIVATEN ZUR BEKÄMPFUNG VON SPINNMILBEN DURCH ANGIESSEN, TRÖPFCHENAPPLIKATION, TAUCHAPPLIKATION ODER BODENINJEKTION**
USE OF N-ARYLAMIDINE SUBSTITUTED TRIFLUOROETHYLSULFOXIDE DERIVATIVES FOR COMBATING SPIDER MITES BY DRENCHING, DRIP APPLICATION, DIP APPLICATION OR SOIL INJECTION
UTILISATION DE DÉRIVÉS DE TRIFLUOROÉTHYLSULFOXYDE N-ARYLAMIDINE-SUBSTITUÉS POUR LA LUTTE CONTRE LES MITES SPIDER PAR ARROSAGE, APPLICATION AU GOUTTE-À-GOUTTE, IMMERSION OU INJECTION DANS LE SOL

(30) Priorität: 04.04.2014 EP 14163528
(43) Veröffentlichungstag der Anmeldung: 08.02.2017
(73) Patentinhaber: Bayer CropScience Aktiengesellschaft, 40789 Monheim am Rhein (DE)
(72) Erfinder: ALIG, Bernd, 53639 Königswinter (DE); CEREZO-GALVEZ, Silvia, 40764 Langenfeld (DE); FISCHER, Reiner, 40789 Monheim (DE); KÖHLER, Adeline, 40764 Langenfeld (DE); HAHN, Julia Johanna, 40589 Düsseldorf (DE); LÖSEL, Peter, 51371 Leverkusen (DE); MALSAM, Olga, 51503 Rösrath (DE)
(74) Vertreter: BIP Patents
(86) Internationale Anmeldenummer: PCT/EP2015/056941
(87) Internationale Veröffentlichungsnummer: WO 2015/150348

(56) Entgegenhaltungen:
- EP-A1- 2 606 726
- WO-A1-2007/131680
- WO-A1-2011/006605

## Beschreibung

Die vorliegende Erfindung betrifft die Verwendung von *N*-Arylamidin-substituierten Trifluoroethylsulfoxid-Derivaten zur Bekämpfung von Spinnmilben durch Angießen auf den Boden, Tröpfchenapplikation auf den Boden, Eintauchen von Wurzelwerk oder Zwiebeln oder Bodeninjektion.

Die insektizide und akarizide Wirkung von *N*-Arylamidin-substituierten Trifluoroethylsulfoxid-Derivaten nach Spritzapplikation ist bekannt aus WO 2007/131680 und WO 2013/092350. Ferner werden in WO 2011/006605 Bodenapplikationsformen von systemisch wirksamen Phenyltriazolverbindungen beschrieben. Überraschenderweise wurde nun gefunden, dass *N*-Arylamidin-substituierte Trifluoroethylsulfoxid-Derivate auch gut zur Bekämpfung von Spinnmilben, durch Angiessen auf den Boden (in Fachkreisen als "Drenching" bekannt), durch Tröpfchenapplikation auf den Boden und/oder auch direkt an die Wurzeln (in Fachkreisen als "Drip application" bekannt), durch Eintauchen von Wurzelwerk, Knollen oder Zwiebeln (in Fachkreisen als Tauchapplikation bzw. "Dip application" bekannt) oder durch hydroponische Systeme oder Bodeninjektion (in Fachkreisen als "Soil injection" bekannt) geeignet sind.

Die vorliegende Erfindung betrifft demnach die Verwendung von *N*-Arylamidin-substituierten Trifluoroethylsulfoxid-Derivaten zur Bekämpfung von Spinnmilben durch Angiessen auf den Boden, durch Tröpfchenapplikation auf den Boden, insbesondere in Bewässerungssystemen, durch Eintauchen von Wurzelwerk, Knollen oder Zwiebeln, oder durch Bodeninjektion. Auf Grund ihrer sehr guten systemischen Wirkung sind derartige Verbindungen für diese Anwendungsformen geeignet. Weiterhin betrifft die vorliegende Erfindung diese Anwendungsformen auf natürlichen (Erdreich) oder artifiziellen Substraten (z.B. Steinwolle, Glaswolle, Quarzsand, Kiesel, Blähton, Vermiculit) im Freiland oder in geschlossenen Systemen (z.B. Gewächshäuser oder unter Folien-Abdeckung) und in einjährigen (z.B. Gemüse, Gewürzen, Zierpflanzen) oder mehrjährigen Kulturen (z.B. Zitruspflanzen, Obst, tropische Kulturen, Gewürzen, Nüsse, Wein, Koniferen und Zierpflanzen).

Die nur allgemein beschriebenen zu schützenden Kulturen sind im Folgenden differenziert und näher spezifiziert. So versteht man hinsichtlich der Anwendung unter Gemüse z.B. Fruchtgemüse und Blütenstände als Gemüse, beispielsweise Paprika, Peperoni, Tomaten, Auberginen, Gurken, Kürbisse, Zucchini, Ackerbohnen, Stangenbohnen, Buschbohnen, Erbsen, Artischocken, Mais;
aber auch Blattgemüse, beispielsweise Kopfsalat, Chicoreé, Endivien, Kressen, Rauken, Feldsalat, Eisbergsalat, Lauch, Spinat, Mangold;
weiterhin Knollen-, Wurzel- und Stengelgemüse, beispielsweise Sellerie, Rote Beete, Möhren, Radieschen, Meerrettich, Schwarzwurzeln, Spargel, Speiserüben, Palmsprossen, Bambussprossen, außerdem Zwiebelgemüse, beispielsweise Zwiebeln, Lauch, Fenchel, Knoblauch;
ferner Kohlgemüse, wie Blumenkohl, Broccoli, Kohlrabi, Rotkohl, Weißkohl, Grünkohl, Wirsing, Rosenkohl, Chinakohl.

Hinsichtlich der Anwendung versteht man unter mehrjährigen Kulturen Zitrus, wie beispielsweise Orangen, Grapefruits, Mandarinen, Zitronen, Limetten, Bitterorangen, Kumquats, Satsumas;
aber auch Kernobst, wie beispielsweise Äpfel, Birnen und Quitten und Steinobst, wie beispielsweise Pfirsiche, Nektarinen, Kirschen, Pflaumen, Zwetschgen, Aprikosen, Mandel, Pistazien,Oliven;
weiterhin Wein, Hopfen, Tee und tropische Kulturen, wie beispielsweise Mangos, Papayas, Feigen, Ananas, Datteln, Bananen, Durians (Stinkfrüchte), Kakis, Kokosnüsse, Kakao, Kaffee, Avocados, Litschies, Maracujas, Guaven,
außerdem Mandeln und Nüsse wie beispielsweise Haselnüsse, Walnüsse, Cashewnüsse, Paranüsse, Pekannüsse, Butternüsse, Kastanien, Hickorynüsse, Macadamiannüsse, Erdnüsse,
darüber hinaus auch Beerenfrüchte wie beispielsweise Johannisbeeren, Stachelbeeren, Himbeeren, Brombeeren, Heidelbeeren, Erdbeeren, Preiselbeeren, Kiwis, Cranberries.

Hinsichtlich der Anwendung versteht man unter Zierpflanzen ein- und mehrjährige Pflanzen, z.B. Schnittblumen wie beispielsweise Rosen, Nelken, Gerbera, Lilien, Margeriten, Chrysanthemen, Tulpen, Narzissen, Anemonen, Mohn, Amyrillis, Dahlien, Azaleen, Malven,
aber auch z.B. Beetpflanzen, Topfpflanzen und Stauden, wie beispielsweise Rosen, Tagetes, Stiefmütterchen, Geranien, Fuchsien, Hibiscus, Chrysanthemen, Fleißige Lieschen, Alpenveilchen, Ursambaraveilchen, Sonnenblumen, Begonien,
ferner z.B. Sträucher und Koniferen wie beispielsweise Ficus, Rhododendron, Fichten, Tannen, Kiefern, Eiben, Wacholder, Pinien, Oleander.

Hinsichtlich der Anwendung versteht man unter Gewürzen ein- und mehrjährige Pflanzen wie beispielsweise Anis, Chilli, Paprika, Pfeffer, Vanille, Majoran, Thymian, Gewürznelken, Wacholderbeeren, Zimt, Estragon, Koryander, Safran, Ingwer.

Weitere Anwendungen ergeben sich in Flächenkulturen wie Baumwolle, Mais und Soja.

Bei den *N*-Arylamidin-substituierten Trifluoroethylsulfoxid-Derivaten handelt es sich um Verbindungen der Formel (I) 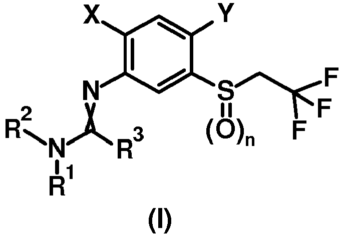 wobei (Ausgestaltung 3-4)
n für die Zahl 1 steht,
X und Y für folgende Kombinationen X/Y stehen: Cl/Cl, F/Cl, Br/Br, Br/Cl, Cl/Br, F/Br, Methyl/Methyl, F/Methyl, Methyl/Cl, Cl/Methyl oder H/Trifluoromethyl,
R² für Wasserstoff, Methyl, Ethyl, (2,2)Difluorethyl oder (2,2,2)Trifluorethyl steht, und
R¹ und R³ zusammen mit den Atomen, an die sie gebunden sind, für eine der folgenden Gruppen stehen 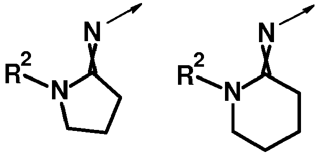 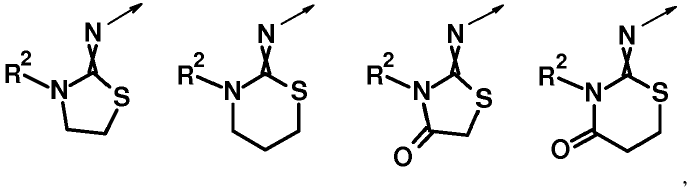 wobei der Pfeil zum Rest des Moleküls zeigt.

In einer weiteren Ausgestaltung (Ausgestaltung 3-5) werden besonders bevorzugte Substituenten bzw. Bereiche der in den Verbindungen der Formel (I) aufgeführten Reste wie folgt definiert, wobei
n für die Zahl 1 steht,
X und Y für folgende Kombinationen X/Y stehen: Cl/Cl, F/Cl, Br/Br, Br/Cl, Cl/Br, F/Br, Methyl/Methyl, F/Methyl, Methyl/Cl, Cl/Methyl oder H/Trifluoromethyl,
R² für Wasserstoff, Methyl, Ethyl, (2,2)Difluorethyl oder (2,2,2)Trifluorethyl steht, und
R¹ und R³ zusammen mit den Atomen, an die sie gebunden sind, für eine der folgenden Gruppen stehen 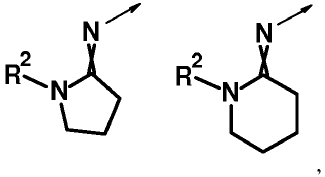 wobei der Pfeil zum Rest des Moleküls zeigt.

In einer weiteren Ausgestaltung (Ausgestaltung 3-6) werden besonders bevorzugte Substituenten bzw. Bereiche der in den Verbindungen der Formel (I) aufgeführten Reste wie folgt definiert,
wobei
n für die Zahl 1 steht,
X und Y für folgende Kombinationen X/Y stehen: Cl/Cl, F/Cl, Br/Br, Br/Cl, Cl/Br, F/Br, Methyl/Methyl, F/Methyl, Methyl/Cl, Cl/Methyl oder H/Trifluoromethyl,
R² für Wasserstoff, Methyl, Ethyl, (2,2)Difluorethyl oder (2,2,2)Trifluorethyl steht, und
R¹ und R³ zusammen mit den Atomen, an die sie gebunden sind, für eine der folgenden Gruppen stehen 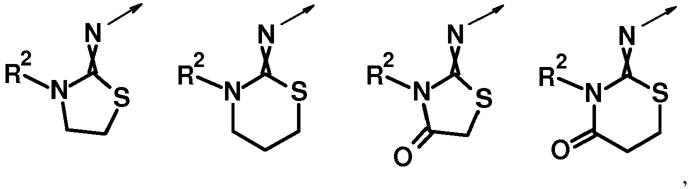 wobei der Pfeil zum Rest des Moleküls zeigt.

Ganz besonders bevorzugte Substituenten bzw. Bereiche der in den Verbindungen der Formel (I) aufgeführten Reste werden im Folgenden erläutert,
wobei (Ausgestaltung 4-1)
n für die Zahl 1 steht,
X und Y für folgende Kombinationen X/Y stehen: Cl/Cl, Br/Cl, Cl/Br oder F/Methyl,
R² für Wasserstoff, Methyl, (2,2)Difluorethyl oder (2,2,2)Trifluorethyl steht, und
R¹ und R³ zusammen mit den Atomen, an die sie gebunden sind, für eine der folgenden Gruppen stehen 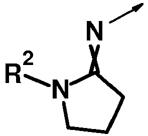 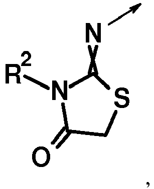 wobei der Pfeil zum Rest des Moleküls zeigt.

In einer weiteren Ausgestaltung (Ausgestaltung 4-2) werden ganz besonders bevorzugte Substituenten bzw. Bereiche der in den Verbindungen der Formel (I) aufgeführten Reste wie folgt definiert,
wobei
n für die Zahl 1 steht,
X und Y für folgende Kombinationen X/Y stehen: Cl/Cl, Br/Cl, Cl/Br oder F/Methyl,
R² für Wasserstoff, Methyl, (2,2)Difluorethyl oder (2,2,2)Trifluorethyl steht, und
R¹ und R³ zusammen mit den Atomen, an die sie gebunden sind, für folgende Gruppe steht 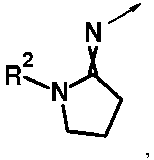 wobei der Pfeil zum Rest des Moleküls zeigt.

In einer weiteren Ausgestaltung (Ausgestaltung 4-3) werden ganz besonders bevorzugte Substituenten bzw. Bereiche der in den Verbindungen der Formel (I) aufgeführten Reste wie folgt definiert,
wobei
n für die Zahl 1 steht,
X für Fluor steht,
Y für Methyl steht,
R² für (2,2,2)Trifluorethyl steht, und
R¹ und R³ zusammen mit den Atomen, an die sie gebunden sind, für folgende Gruppe steht 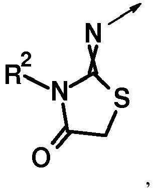 wobei der Pfeil zum Rest des Moleküls zeigt.

In einer weiteren Ausgestaltung (Ausgestaltung 4-4) werden ganz besonders bevorzugte Substituenten bzw. Bereiche der in den Verbindungen der Formel (I) aufgeführten Reste wie folgt definiert,
wobei
n für die Zahl 1 steht,
X und Y für folgende Kombinationen X/Y stehen: Cl/Cl, Br/Cl, Cl/Br, F/Methyl oder H/Trifluoromethyl,
R² für Wasserstoff, Methyl, (2,2)Difluorethyl oder (2,2,2)Trifluorethyl steht, und
R¹ und R³ zusammen mit den Atomen, an die sie gebunden sind, für eine der folgenden Gruppen stehen 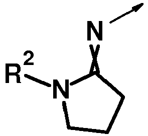 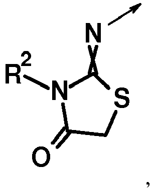 wobei der Pfeil zum Rest des Moleküls zeigt.

In einer weiteren Ausgestaltung (Ausgestaltung 4-5) werden ganz besonders bevorzugte Substituenten bzw. Bereiche der in den Verbindungen der Formel (I) aufgeführten Reste wie folgt definiert,
wobei
n für die Zahl 1 steht,
X und Y für folgende Kombinationen X/Y stehen: Cl/Cl, Br/Cl, Cl/Br, F/Methyl oder H/Trifluormethyl,
R² für Wasserstoff, Methyl, (2,2)Difluorethyl oder (2,2,2)Trifluorethyl steht, und
R¹ und R³ zusammen mit den Atomen, an die sie gebunden sind, für folgende Gruppe steht 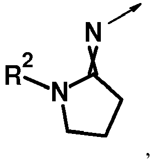 wobei der Pfeil zum Rest des Moleküls zeigt.

In einer weiteren Ausgestaltung (Ausgestaltung 4-6) werden ganz besonders bevorzugte Substituenten bzw. Bereiche der in den Verbindungen der Formel (I) aufgeführten Reste wie folgt definiert,
wobei
n für die Zahl 1 steht,
X und Y für folgende Kombinationen X/Y stehen: F/Methyl oder H/Trifluormethyl,
R² für (2,2,2)Trifluorethyl steht, und
R¹ und R³ zusammen mit den Atomen, an die sie gebunden sind, für folgende Gruppe steht 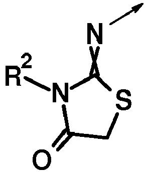 wobei der Pfeil zum Rest des Moleküls zeigt.

Die oben aufgeführten allgemeinen oder in Vorzugsbereichen aufgeführten Restedefinitionen bzw. Erläuterungen können untereinander, also auch zwischen den jeweiligen Vorzugsbereichen, beliebig kombiniert werden.

Erfindungsgemäß besonders bevorzugt werden Verbindungen der Formel (I), in welchen eine Kombination der vorstehend als besonders bevorzugt aufgeführten Bedeutungen vorliegt, wobei jede vorstehend als besonders bevorzugt beschriebene Ausgestaltung eine eigenständige Kombination darstellt, insbesondere eine Kombination wie beschrieben in Ausgestaltung 3-5 oder in Ausgestaltung 3-6.

Erfindungsgemäß ganz besonders bevorzugt werden Verbindungen der Formel (I), in welchen eine Kombination der vorstehend als ganz besonders bevorzugt aufgeführten Bedeutungen vorliegt, wobei jede vorstehend als ganz besonders bevorzugt beschriebene Ausgestaltung eine eigenständige Kombination darstellt, insbesondere eine Kombination wie beschrieben in Ausgestaltung 4-1 oder in Ausgestaltung 4-2 oder in Ausgestaltung 4-3 oder in Ausgestaltung 4-4 oder in Ausgestaltung 4-5 oder in Ausgestaltung 4-6. Die Verbindungen der Formel (I) können gegebenenfalls in Abhängigkeit von der Art der Substituenten in isomerer Form als geometrische und/oder als optische Isomere vorliegen. Sie können diesbezüglich sowohl in reiner Form als auch als Mischungen verschiedener möglicher isomerer Formen vorliegen, insbesondere von Stereoisomeren, wie E- und Z-, threo- und erythro-, sowie optischen Isomeren, wie R- und S-Isomeren oder Atropisomeren, gegebenenfalls aber auch von Tautomeren. Es werden sowohl die E- als auch die Z-Isomeren, wie auch die threo- und erythro-, sowie die optischen Isomeren, beliebige Mischungen dieser Isomeren, sowie die möglichen tautomeren Formen im Rahmen der erfindungsgemäßen Verwendungen beansprucht.

In weiteren bevorzugten Ausführungsformen betrifft die Erfindung die Verwendung von Verbindungen der Formel (I), die als E- oder Z-Isomere vorliegen. Hieraus ergibt sich die erfindungsgemäße Verwendung von Verbindungen der Formel (I-Z) beziehungsweise (I-E).

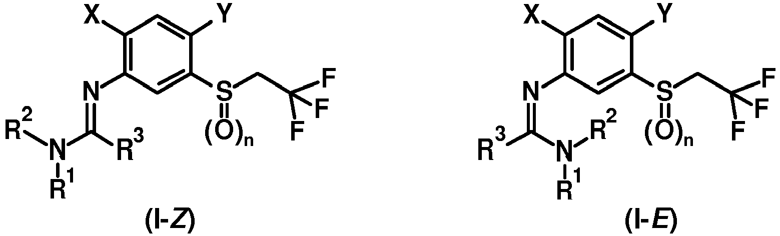

In den durch die Strukturen (I-Z) und (I-E) definierten Verbindungen der Formel (I) haben die Reste bzw. Strukturelemente R¹, R², R³, n, Y und X die weiter oben genannten Bedeutungen.

Besonders bevorzugt innerhalb der durch die Strukturen (I-Z) und (I-E) definierten Verbindungen der Formel (I) werden diejenigen Verbindungen, in welchen eine Kombination der vorstehend als besonders bevorzugt aufgeführten Bedeutungen vorliegt, wobei jede vorstehend als besonders bevorzugt beschriebene Ausgestaltung eine eigenständige Kombination darstellt, insbesondere eine Kombination wie beschrieben in Ausgestaltung 3-5 oder in Ausgestaltung 3-6.

Ganz besonders bevorzugt innerhalb der durch die Strukturen (I-Z) und (I-E) definierten Verbindungen der Formel (I) werden diejenigen Verbindungen, in welchen eine Kombination der vorstehend als ganz besonders bevorzugt aufgeführten Bedeutungen vorliegt, wobei jede vorstehend als ganz besonders bevorzugt beschriebene Ausgestaltung eine eigenständige Kombination darstellt, insbesondere eine Kombination wie beschrieben in Ausgestaltung 4-1 oder in Ausgestaltung 4-2 oder in Ausgestaltung 4-3 oder in Ausgestaltung 4-4 oder in Ausgestaltung 4-5 oder in Ausgestaltung 4-6.

In weiteren bevorzugten Ausführungsformen betrifft die Erfindung die Verwendung von Verbindungen der Formel (I), die als optische Isomere vorliegen, insbesondere von Verbindungen der Formel (I), die als R- oder S-Enantiomere in Bezug auf das chirale Schwefelatom vorliegen. Vorzugsweise werden diese optisch aktiven, stereoisomeren Formen der Verbindungen der Formel (I) und deren Salze erfindungsgemäß verwendet.

Eine individuelle Ausgestaltung der erfindungsgemäßen Verwendung ist daher auf das Vorliegen des R-Enantiomers bezogen auf das chirale Schwefelatom gerichtet bzw. auf ein Gemisch, welches mehrheitlich das R-Enantiomer umfasst, vorzugsweise wobei das Verhältnis von R- zu S-Enantiomer mindestens 60:40 und zunehmend bevorzugt mindestens 70:30, 75:25, 80:20, 85:15 und 90:10 beträgt.

Eine weitere individuelle Ausgestaltung der erfindungsgemäßen Verwendung ist daher auf das Vorliegen des S-Enantiomers bezogen auf das chirale Schwefelatom gerichtet bzw. auf ein Gemisch, welches mehrheitlich das S-Enantiomer umfasst, vorzugsweise wobei das Verhältnis von S- zu R-Enantiomer mindestens 60:40 und zunehmend bevorzugt mindestens 70:30, 75:25, 80:20, 85:15 und 90:10 beträgt.

Ganz besonders bevorzugte Enantiomere sind die nachstehend angegebenen Enantiomere der Verbindung Ib-168, insbesondere dessen R-Enantiomer.

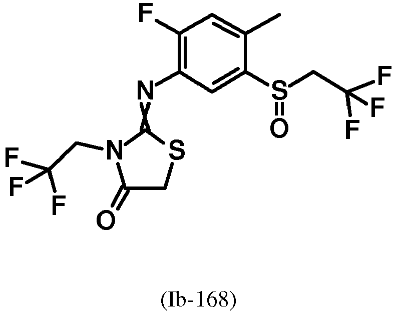

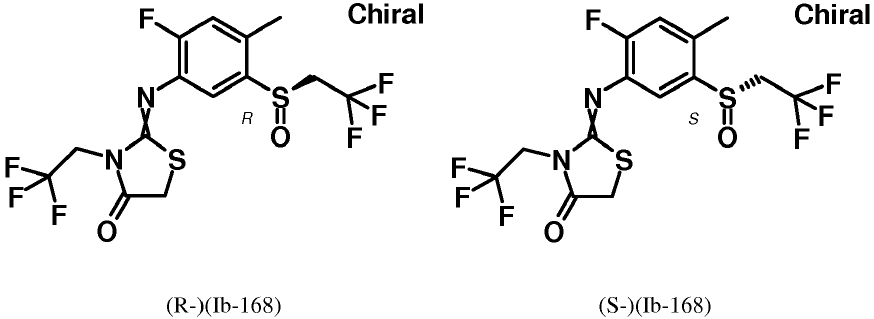

Die erfindungsgemäß zu verwendenden Verbindungen der Formel (I) können ferner in verschiedenen polymorphen Formen oder als Mischung verschiedener polymorpher Formen vorliegen. Sowohl die reinen Polymorphe als auch die Polymorphgemische können erfindungsgemäß verwendet werden.

Die Verbindungen der Formel (I) beinhalten ferner auch alle möglichen Rotamere und Gemische davon.

Die erfindungsgemäße Anwendung der Verbindungen der Formel (I) erfolgt gegen eine große Breite von Spinnentieren, die in der Landwirtschaft, im Gartenbau, in Forsten und in Gärten und Freizeiteinrichtungen vorkommen, gegen normal sensible und resistente Arten sowie gegen alle oder einzelne Entwicklungsstadien. Zu diesen Schädlingen gehören:
Schädlinge aus dem Stamm der Arthropoda, insbesondere aus der Klasse der Arachnida z.B. Acarus spp., z.B. Acarus siro, Aceria kuko, Aceria sheldoni, Aculops spp., Aculus spp., z.B. Aculus fockeui, Aculus schlechtendali, Amblyomma spp., Amphitetranychus viennensis, Argas spp., Boophilus spp., Brevipalpus spp., z.B. Brevipalpus phoenicis, Bryobia graminum, Bryobia praetiosa, Centruroides spp., Chorioptes spp., Dermanyssus gallinae, Dermatophagoides pteronyssinus, Dermatophagoides farinae, Dermacentor spp., Eotetranychus spp., z.B. Eotetranychus hicoriae, Epitrimerus pyri, Eutetranychus spp., z.B. Eutetranychus banksi, Eriophyes spp., z.B. Eriophyes pyri, Glycyphagus domesticus, Halotydeus destructor, Hemitarsonemus spp., z.B. Hemitarsonemus latus (=Polyphagotarsonemus latus), Hyalomma spp., Ixodes spp., Latrodectus spp., Loxosceles spp., Neutrombicula autumnalis, Nuphersa spp., Oligonychus spp., z.B. Oligonychus coniferarum, Oligonychus ilicis, Oligonychus indicus, Oligonychus mangiferus, Oligonychus pratensis, Oligonychus punicae, Oligonychus yothersi, Ornithodorus spp., Ornithonyssus spp., Panonychus spp., z.B. Panonychus citri (=Metatetranychus citri), Panonychus ulmi (=Metatetranychus ulmi), Phyllocoptruta oleivora, Platytetranychus multidigituli, Polyphagotarsonemus latus, Psoroptes spp., Rhipicephalus spp., Rhizoglyphus spp., Sarcoptes spp., Scorpio maurus, Steneotarsonemus spp., Steneotarsonemus spinki, Tarsonemus spp., z.B. Tarsonemus confusus, Tarsonemus pallidus, Tetranychus spp., z.B. Tetranychus canadensis, Tetranychus cinnabarinus, Tetranychus turkestani, Tetranychus urticae, Trombicula alfreddugesi, Vaejovis spp., Vasates lycopersici;

### Formulierungen

Verbindungen der Formel (I) können im Rahmen von Formulierungen und daraus bereiteten Anwendungsformen als Schädlingsbekämpfungsmittel verwendet werden, wie z. B. Drench- und Dripbrühen, umfassend die Verbindung der Formel (I). Gegebenenfalls enthalten die Anwendungsformen weitere Schädlingsbekämpfungsmittel und/oder die Wirkung verbessernde Adjuvantien wie Penetrationsförderer, z. B. vegetative Öle wie beispielsweise Rapsöl, Sonnenblumenöl, Mineralöle wie beispielsweise Paraffinöle, Alkylester vegetativer Fettsäuren wie beispielsweise Rapsöl- oder Sojaölmethylester oder Alkanol-alkoxylate und/oder Spreitmittel wie beispielsweise Alkylsiloxane und/oder Salze z.B. organische oder anorganische Ammonium- oder Phosphoniumsalze wie beispielsweise Ammoniumsulfat oder Diammonium-hydrogenphosphat und/oder die Retention fördernde Mittel wie z. B. Dioctylsulfosuccinat oder Hydroxypropyl-guar Polymere und/oder Humectants wie z.B. Glycerin und/oder Dünger wie beispielsweise Ammonium-, Kalium- oder Phosphor-enthaltende Dünger.

Übliche Formulierungen sind beispielsweise wasserlösliche Flüssigkeiten (SL), Emulsionskonzentrate (EC), Emulsionen in Wasser (EW), Suspensionskonzentrate (SC, SE, FS, OD), in Wasser dispergierbare Granulate (WG), Granulate (GR) und Kapselkonzentrate (CS); diese und weitere mögliche Formuliertypen sind beispielsweise durch Crop Life International und in Pesticide Specifications, Manual on development and use of FAO and WHO specifications for pesticides, FAO Plant Production and Protection Papers - 173, prepared by the FAO/WHO Joint Meeting on Pesticide Specifications, 2004, ISBN: 9251048576 beschrieben. Gegebenenfalls enthalten die Formulierungen neben einem oder mehreren Verbindungen der Formel (I) weitere agrochemische Wirkstoffe.

Vorzugsweise handelt es sich um Formulierungen oder Anwendungsformen, welche Hilfsstoffe wie beispielsweise Streckmittel, Lösemittel, Spontanitätsförderer, Trägerstoffe, Emulgiermittel, Dispergiermittel, Frostschutzmittel, Biozide, Verdicker und/oder weitere Hilfsstoffe wie beispielsweise Adjuvantien enthalten. Ein Adjuvant in diesem Kontext ist eine Komponente, die die biologische Wirkung der Formulierung verbessert, ohne dass die Komponente selbst eine biologische Wirkung hat. Beispiele für Adjuvantien sind Mittel, die die Retention, das Spreitverhalten, das Anhaften an der Blattoberfläche oder die Penetration fördern.

Diese Formulierungen werden in bekannter Weise hergestellt, z.B. durch Vermischen der Verbindung der Formel (I) mit Hilfsstoffen wie beispielsweise Streckmitteln, Lösemitteln und/oder festen Trägerstoffen und/oder weiteren Hilfsstoffen wie beispielsweise oberflächenaktive Stoffe. Die Herstellung der Formulierungen erfolgt entweder in geeigneten Anlagen oder auch vor oder während der Anwendung.

Als Hilfsstoffe können solche Stoffe Verwendung finden, die geeignet sind, der Formulierung der Verbindung der Formel (I) oder den aus diesen Formulierungen bereiteten Anwendungsformen besondere Eigenschaften, wie bestimmte physikalische, technische und/oder biologische Eigenschaften zu verleihen. Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (Poly-)Ether, der einfachen und substituierten Amine, Amide, Lactame (wie N-Alkylpyrrolidone) und Lactone, der Sulfone und Sulfoxide (wie Dimethylsulfoxid).

Im Falle der Benutzung von Wasser als Streckmittel können z.B. auch organische Lösemittel als Hilfslösemittel verwendet werden. Als flüssige Lösemittel kommen im Wesentlichen infrage: Aromaten wie Xylol, Toluol oder Alkylnaphthaline, chlorierte Aromaten oder chlorierte aliphatische Kohlenwasser-stoffe wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole wie Butanol oder Glykol sowie deren Ether und Ester, Ketone wie Aceton, Methylethylketon, Methylisobutylketon oder Cyclohexanon, stark polare Lösemittel wie Dimethylformamid und Dimethylsulfoxid sowie Wasser. Grundsätzlich können alle geeigneten Lösemittel verwendet werden. Geeignete Lösemittel sind beispielsweise aromatische Kohlenwasserstoffe wie z.B. Xylol, Toluol oder Alkylnaphthaline, chlorierte aromatische oder aliphatische Kohlenwasserstoffe wie z.B. Chlorbenzol, Chlorethylen, oder Methylenchlorid, aliphatische Kohlenwasserstoffe wie z.B. Cyclohexan, Paraffine, Erdölfraktionen, mineralische und pflanzliche Öle, Alkohole wie z.B. Methanol, Ethanol, iso-Propanol, Butanol oder Glykol sowie deren Ether und Ester, Ketone wie z.B. Aceton, Methylethylketon, Methylisobutylketon oder Cyclohexanon, stark polare Lösemittel wie Dimethylsulfoxid sowie Wasser.

Grundsätzlich können alle geeigneten Trägerstoffe eingesetzt werden. Als Trägerstoffe kommen insbesondere infrage: z.B. Ammoniumsalze und natürliche Gesteinsmehle wie Kaoline, Tonerden, Talkum, Kreide, Quarz, Attapulgit, Montmorillonit oder Diatomeenerde und synthetische Gesteinsmehl, wie hochdisperse Kieselsäure, Aluminiumoxid und natürliche oder synthetische Silikate, Harze, Wachse und /oder feste Düngemittel. Mischungen solcher Trägerstoffe können ebenfalls verwendet werden. Als Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Papier, Kokosnussschalen, Maiskolben und Tabakstängel.

Auch verflüssigte gasförmige Streckmittel oder Lösemittel können eingesetzt werden. Insbesondere eignen sich solche Streckmittel oder Trägerstoffe, welche bei normaler Temperatur und unter Normaldruck gasförmig sind, z.B. Aerosol-Treibgase wie Halogenkohlenwasserstoffe sowie Butan, Propan, Stickstoff und Kohlendioxid.

Beispiele für Emulgier- und/oder Schaum erzeugende Mittel, Dispergiermittel oder Benetzungsmittel mit ionischen oder nicht-ionischen Eigenschaften oder Mischungen dieser oberflächenaktiven Stoffe sind Salze von Polyacrylsäure, Salze von Lignosulphonsäure, Salze von Phenolsulphonsäure oder Naphthalinsulphonsäure, Polykondensate von Ethylenoxid mit Fettalkoholen oder mit Fettsäuren oder mit Fettaminen, mit substituierten Phenolen (vorzugsweise Alkylphenole oder Arylphenole), Salze von Sulphobernsteinsäureestern, Taurinderivate (vorzugsweise Alkyltaurate), Phosphorsäureester von polyethoxylierten Alkoholen oder Phenole, Fettsäureester von Polyolen und Derivate der Verbindungen enthaltend Sulphate, Sulphonate und Phosphate, z.B. Alkylarylpolyglycolether, Alkylsulfonate, Alkylsulfate, Arylsulfonate, Eiweißhydrolysate, Lignin-Sulfitablaugen und Methylcellulose. Die Anwesenheit einer oberflächenaktiven Substanz ist vorteilhaft, wenn eine der Verbindungen der Formel (I) und/oder einer der inerten Trägerstoffe nicht in Wasser löslich ist und wenn die Anwendung in Wasser erfolgt.

Als weitere Hilfsstoffe können in den Formulierungen und den daraus abgeleiteten Anwendungsformen Farbstoffe wie anorganische Pigmente, z.B. Eisenoxid, Titanoxid, Ferrocyanblau und organische Farbstoffe wie Alizarin-, Azo- und Metallphthalocyaninfarbstoffe und Nähr- und Spurennährstoffe wie Salze von Eisen, Mangan, Bor, Kupfer, Kobalt, Molybdän und Zink vorhanden sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel. Weiterhin enthalten sein können schaumerzeugende Mittel oder Entschäumer.

Ferner können die Formulierungen und daraus abgeleiteten Anwendungsformen als zusätzliche Hilfsstoffe auch Haftmittel wie Carboxymethylcellulose, natürliche und synthetische pulverige, körnige oder latexförmige Polymere enthalten wie Gummiarabikum, Polyvinylalkohol, Polyvinylacetat sowie natürliche Phospholipide wie Kephaline und Lecithine und synthetische Phospholipide. Weitere Hilfsstoffe können mineralische und vegetabile Öle sein.

Gegebenenfalls können noch weitere Hilfsstoffe in den Formulierungen und den daraus abgeleiteten Anwendungsformen enthalten sein. Solche Zusatzstoffe sind beispielsweise Duftstoffe, schützende Kolloide, Bindemittel, Klebstoffe, Verdicker, thixotrope Stoffe, Penetrationsförderer, Retentionsförderer, Stabilisatoren, Sequestiermittel, Komplexbildner, Humectans, Spreitmittel. Im Allgemeinen können die Verbindungen der Formel (I) mit jedem festen oder flüssigen Zusatzstoff, welches für Formulierungszwecke gewöhnlich verwendet wird, kombiniert werden.

Als Retentionsförderer kommen alle diejenigen Substanzen in Betracht, die die dynamische Oberflächenspannung verringern wie beispielsweise Dioctylsulfosuccinat oder die die Visko-Elastizität erhöhen wie beispielsweise Hydroxypropyl-guar Polymere.

Als Penetrationsförderer kommen im vorliegenden Zusammenhang alle diejenigen Substanzen in Be-tracht, die üblicherweise eingesetzt werden, um das Eindringen von agrochemischen Wirkstoffen in Pflanzen zu verbessern. Penetrationsförderer werden in diesem Zusammenhang dadurch definiert, dass sie aus der (in der Regel wässerigen) Applikationsbrühe und/oder aus dem Spritzbelag in die Kutikula der Pflanze eindringen und dadurch die Stoffbeweglichkeit (Mobilität) der Wirkstoffe in der Kutikula erhöhen können. Die in der Literatur (Baur et al., 1997, Pesticide Science 51, 131-152) beschriebene Methode kann zur Bestimmung dieser Eigenschaft eingesetzt werden. Beispielhaft werden genannt Alkoholalkoxylate wie beispielsweise Kokosfettethoxylat (10) oder Isotridecylethoxylat (12), Fettsäureester wie beispielsweise Rapsöl- oder Sojaölmethylester, Fettamine Alkoxylate wie beispielsweise Tallowamine-ethoxylat (15) oder Ammonium- und/oder Phosphonium-Salze wie beispielsweise Ammoniumsulfat oder Diammonium-hydrogenphosphat.

Die Formulierungen enthalten bevorzugt zwischen 0,00000001 und 98 Gew.-% der Verbindung der Formel (I), besonders bevorzugt zwischen 0,01 und 95 Gew.-% der Verbindung der Formel (I), ganz besonders bevorzugt zwischen 0,5 und 90 Gew.-% der Verbindung der Formel (I), bezogen auf das Gewicht der Formulierung.

Der Gehalt an der Verbindung der Formel (I) in den aus den Formulierungen bereiteten Anwendungsformen kann in weiten Bereichen variieren. Die Konzentration der Verbindung der Formel (I) in den Anwendungsformen kann üblicherweise zwischen 0,00000001 und 95 Gew.-% der Verbindung der Formel (I), vorzugsweise zwischen 0,00001 und 1 Gew.-%, bezogen auf das Gewicht der Anwendungsform, liegen. Die Anwendung geschieht in einer den Anwendungsformen angepaßten üblichen Weise.

### Pflanzen und Pflanzenteile

Erfindungsgemäß können alle Pflanzen behandelt werden, die für die vorgesehenen Applikationsformen geeignet sind. Unter Pflanzen werden hierbei alle Pflanzen und Pflanzenpopulationen verstanden wie erwünschte und unerwünschte Wildpflanzen oder Kulturpflanzen (einschließlich natürlich vorkommender Kulturpflanzen), beispielsweise Getreide (Weizen, Reis, Triticale, Gerste, Roggen, Hafer), Mais, Soja, Kartoffel, Zuckerrüben, Zuckerrohr, Tomaten, Erbsen und andere Gemüsesorten, Baumwolle, Tabak, Raps, sowie Obstpflanzen (mit den Früchten Äpfel, Birnen, Zitrusfrüchten und Weintrauben). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten.

Wie bereits oben erwähnt können erfindungsgemäß alle Pflanzen behandelt werden. In einer bevorzugten Ausführungsform werden wild vorkommende oder durch konventionelle biologische Zuchtmethoden wie Kreuzung oder Protoplastenfusion erhaltene Pflanzenarten und Pflanzensorten behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Rassen, Bio- und Genotypen sein.

### Transgene Pflanze, Saatgutbehandlung und Integrationsereignisse

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehrfähigkeit der Pflanzen gegen tierische und mikrobielle Schädlinge, wie Insekten, Spinnentiere, Nematoden, Milben, Schnecken, bewirkt z.B. durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden, ferner eine erhöhte Abwehrfähigkeit der Pflanzen gegen pflanzenpathogene Pilze, Bakterien und/oder Viren, bewirkt z.B. durch Systemisch Akquirierte Resistenz (SAR), Systemin, Phytoalexine, Elicitoren sowie Resistenzgene und entsprechend exprimierte Proteine und Toxine, sowie eine erhöhte Toleranz der Pflanzen gegen bestimmte herbizide Wirkstoffe, beispielsweise Imidazolinonen, Sulfonyl-harnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele transgener Pflanzen werden die wichtigen Kulturpflanzen, wie Getreide (Weizen, Reis, Triticale, Gerste, Roggen, Hafer), Mais, Soja, Kartoffel, Zuckerrüben, Zuckerrohr, Tomaten, Erbsen und andere Gemüsesorten, Baumwolle, Tabak, Raps, sowie Obstpflanzen (mit den Früchten Äpfel, Birnen, Zitrusfrüchten und Weintrauben) erwähnt, wobei Mais, Soja, Weizen, Reis, Kartoffel, Baumwolle, Zuckerrohr, Tabak und Raps besonders hervorgehoben werden. Als Eigenschaften ("Traits") werden besonders hervorgehoben die erhöhte Abwehrfähigkeit der Pflanzen gegen Insekten, Spinnentiere, Nematoden und Schnecken.

### Pflanzenschutz - Behandlungsarten

Bei systemisch wirksamen Verbindungen gelangen die Verbindungen der Formel (I) über das Wurzelwerk in die Pflanzen. Die Behandlung der Pflanzen erfolgt dann durch Einwirkung der Verbindungen der Formel (I) auf den Lebensraum der Pflanze. Das kann durch Drenchen, Einmischen in den Boden oder die Nährlösung sein, d.h. der Standort der Pflanze (z.B. Boden oder hydroponische Systeme) wird mit einer flüssigen Form der Verbindungen der Formel (I) getränkt, oder durch die Bodenapplikation, d.h. die Verbindungen der Formel (I) werden in fester Form, (z.B. in Form eines Granulats) in den Standort der Pflanzen eingebracht. Bei Wasserreiskulturen kann das auch durch Zudosieren der Verbindung der Formel (I) in einer festen Anwendungsform (z.B. als Granulat) in ein überflutetes Reisfeld sein.

### Anwendungsbeispiele

Die folgenden Beispiele erläutern die Erfindung ohne sie in irgendeiner Weise zu limitieren.

### Tetranychus urticae - Drenchtest, OP-resistent (TETRUR)

| | |
|---|---|
| Lösungsmittel: | 7 Gewichtsteile Dimethylformamid |
| Emulgator: | 2 Gewichtsteile Alkylarylpolyglykolether |

Zur Herstellung einer zweckmäßigen Wirkstoffzubereitung wurden 1 Gewichtsteil Wirkstoff mit den angegebenen Mengen Lösungsmittel und Emulgator vermischt und das Konzentrat mit Wasser auf die gewünschte Konzentration verdünnt, wobei das Erdvolumen, in das gedrencht wird, mitberücksichtigt wurde. Es war darauf zu achten, dass in der Erde eine Konzentration von 40 ppm Emulgator nicht überschritten wurde. Zur Herstellung weiterer Testkonzentrationen wurde mit Wasser verdünnt.

Bohnenpflanzen (*Phaseolus vulgaris*) in Erdtöpfen, die stark von allen Stadien der Gemeinen Spinnmilbe (*Tetranychus urticae*) befallen waren, wurden mit einer Wirkstoffzubereitung der gewünschten Konzentration angegossen.

Nach der gewünschten Zeit wurde die Wirkung in % bestimmt. Dabei bedeutet 100 %, dass alle Spinnmilben abgetötet wurden; 0 % bedeutet, dass keine Spinnmilben abgetötet wurden. Die Ergebnisse sind in Tabelle 1 dargestellt ("TETRUR DRENCH").

Zum Vergleich wurde ebenfalls ein Sprühtest durchgeführt wie nachfolgend beschrieben.

### Tetranychus urticae - Sprühtest, OP-resistent (TETRUR)

| | |
|---|---|
| Lösungsmittel: | 7 Gewichtsteile Dimethylformamid |
| Emulgator: | Alkylarylpolyglykolether |

Zur Herstellung einer zweckmäßigen Wirkstoffzubereitung wurde 1 Gewichtsteil Wirkstoff mit den angegebenen Gewichtsteilen Lösungsmittel gelöst und mit Wasser, welches eine Emulgatorkonzentration von 1000 ppm enthielt, bis zum Erreichen der gewünschten Konzentration aufgefüllt. Zur Herstellung weiterer Testkonzentrationen wurde mit emulgatorhaltigem Wasser verdünnt. Ammoniumsalze und Penetrationsförderer (Rapsölmethylester) wurden jeweils in einer Konzentration von 1000 ppm der Präparatelösung zugefügt.

Bohnenpflanzen (*Phaseolus vulgaris*), die stark von allen Stadien der Gemeinen Spinnmilbe (*Tetranychus urticae*) befallen waren, wurden mit einer Wirkstoffzubereitung der gewünschten Konzentration gespritzt. Nach der gewünschten Zeit wurde die Wirkung in % bestimmt. Dabei bedeutet 100 %, dass alle Spinnmilben abgetötet wurden; 0 % bedeutet, dass keine Spinnmilben abgetötet wurden. Die Ergebnisse sind in Tabelle 1 angegeben (TETRUR SPRÜH). Die Verbindungen Ib-33, -115 und -168 sind erfindungsgemäß.

**Tabelle 1:**

| **Verbindung** | **Struktur** | **Test** | **Konzentration in ppm** | **% Wirkung nach 14d** |
|---|---|---|---|---|
| Ib-17 | Chiral | TETRUR DRENCH | 0.8 | 100 |
| | 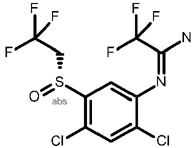 | | 0.16 | 98 |
| | | TETRUR SPRÜH | 0.8 | 98 |
| | | | 0.16 | 0 |
| Ib-21 | 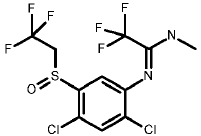 | TETRUR DRENCH | 0.8 | 95 |
| | | | 0.16 | 80 |
| | | TETRUR SPRÜH | 0.8 | 90 |
| | | | 0.16 | 0 |
| Ib-14 | 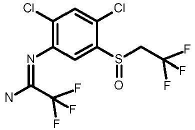 | TETRUR DRENCH | 0.16 | 80 |
| | | TETRUR SPRÜH | 0.16 | 0 |
| Ib-68 | 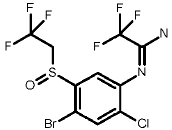 | TETRUR DRENCH | 0.8 | 100 |
| | | | 0.16 | 98 |
| | | TETRUR SPRÜH | 0.8 | 80 |
| | | | 0.16 | 0 |
| Ib-57 | 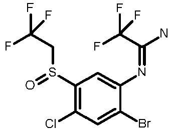 | TETRUR DRENCH | 0.16 | 90 |
| | | TETRUR SPRÜH | 0.16 | 0 |
| Ib-26 | 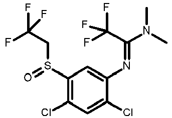 | TETRUR DRENCH | 0.8 | 95 |
| | | TETRUR SPRÜH | 0.8 | 0 |
| Ib-19 | 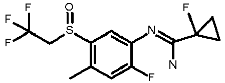 | TETRUR DRENCH | 0.8 | 98 |
| | | | 0.16 | 98 |
| | | TETRUR SPRÜH | 0.8 | 30 |
| | | | 0.16 | 0 |
| Ib-33 | 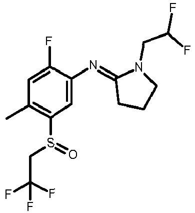 | TETRUR DRENCH | 0.8 | 95 |
| | | | 0.16 | 60 |
| | | TETRUR SPRÜH | 0.8 | 0 |
| | | | 0.16 | 0 |
| Ib-62 | 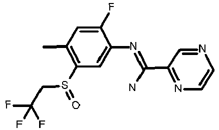 | TETRUR DRENCH | 4 | 90 |
| | | | 0.8 | 90 |
| | | TETRUR SPRÜH | 4 | 0 |
| | | | 0.8 | 0 |
| Ib-115 | 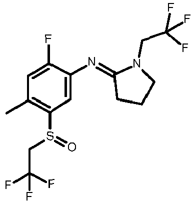 | TETRUR DRENCH | 4 | 90 |
| | | | 0.8 | 90 |
| | | TETRUR SPRÜH | 4 | 0 |
| | | | 0.8 | 0 |
| Ib-168 | Chiral | TETRUR DRENCH | 0.8 | 95 |
| | 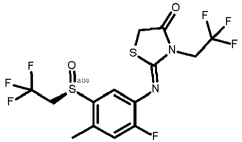 | | 0.16 | 50 |
| | | TETRUR SPRÜH | 0.8 | 30 |
| | | | 0.16 | 0 |
| Ib-01 | 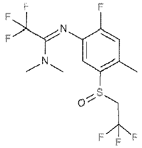 | TETRUR DRENCH | 4 | 100 |
| | | | 0.8 | 100 |
| | | TETRUR SPRÜH | 4 | 98 |
| | | | 0.8 | 0 |
| Ib-11 | 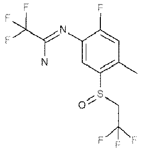 | TETRUR DRENCH | 4 | 100 |
| | | | 0.8 | 100 |
| | | TETRUR SPRÜH | 4 | 95 |
| | | | 0.8 | 50 |
| Ib-16 | 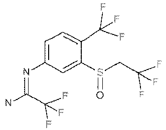 | TETRUR DRENCH | 0.8 | 100 |
| | | | 0.16 | 99 |
| | | TETRUR SPRÜH | 0.8 | 40 |
| | | | 0.16 | 0 |
| Ib-18 | 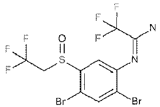 | TETRUR DRENCH | 0.8 | 99 |
| | | | 0.16 | 99 |
| | | TETRUR SPRÜH | 0.8 | 50 |
| | | | 0.16 | 0 |
| Ib-22 | 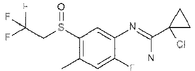 | TETRUR DRENCH | 4 | 90 |
| | | | 0.8 | 90 |
| | | TETRUR SPRÜH | 4 | 30 |
| | | | 0.8 | 0 |
| Ib-24 | 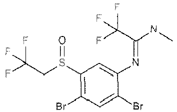 | TETRUR DRENCH | 0.8 | 100 |
| | | TETRUR SPRÜH | 0.8 | 30 |
| Ib-25 | 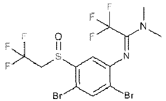 | TETRUR DRENCH | 0.8 | 99 |
| | | TETRUR SPRÜH | 0.8 | 50 |

Ein Vergleich der Ergebnisse nach Sprüh- bzw. Drenchapplikation macht deutlich, dass die Verbindungen der Formel (I) nach Drenchapplikation eine bessere Wirksamkeit als nach Sprühapplikation zeigen.

## Patentansprüche

1. Verwendung von *N*-Arylamidin-substituierten Trifluoroethylsulfoxid-Derivaten der Formel (I) 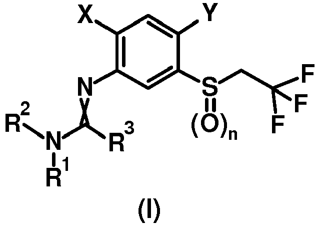 wobei
n für die Zahl 1 steht,
X und Y für folgende Kombinationen X/Y stehen: Cl/Cl, F/Cl, Br/Br, Br/Cl, Cl/Br, F/Br, Methyl/Methyl, F/Methyl, Methyl/Cl, Cl/Methyl oder H/Trifluoromethyl,
R² für Wasserstoff, Methyl, Ethyl, (2,2)Difluorethyl oder (2,2,2)Trifluorethyl steht, und
R¹ und R³ zusammen mit den Atomen, an die sie gebunden sind, für eine der folgenden Gruppen stehen 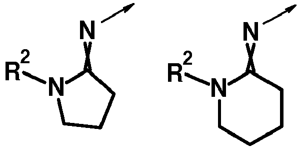 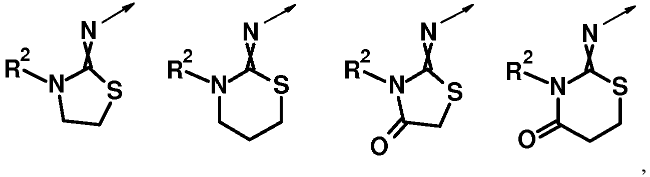
wobei der Pfeil zum Rest des Moleküls zeigt,
zur Bekämpfung von Spinnmilben durch Angiessen auf den Boden, durch Tröpfchenapplikation auf den Boden, durch Eintauchen von Wurzelwerk, Knollen oder Zwiebeln oder durch Bodeninjektion.

2. Verwendung nach Anspruch 1, **dadurch gekennzeichnet, dass**
n für die Zahl 1 steht,
X und Y für folgende Kombinationen X/Y stehen: Cl/Cl, F/Cl, Br/Br, Br/Cl, Cl/Br, F/Br, Methyl/Methyl, F/Methyl, Methyl/Cl, Cl/Methyl oder H/Trifluoromethyl,
R² für Wasserstoff, Methyl, Ethyl, (2,2)Difluorethyl oder (2,2,2)Trifluorethyl steht, und
R¹ und R³ zusammen mit den Atomen, an die sie gebunden sind, für eine der folgenden Gruppen stehen 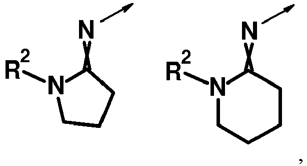 wobei der Pfeil zum Rest des Moleküls zeigt.

3. Verwendung nach Anspruch 1, **dadurch gekennzeichnet, dass**
n für die Zahl 1 steht,
X und Y für folgende Kombinationen X/Y stehen: Cl/Cl, F/Cl, Br/Br, Br/Cl, Cl/Br, F/Br, Methyl/Methyl, F/Methyl, Methyl/Cl, Cl/Methyl oder H/Trifluoromethyl,
R² für Wasserstoff, Methyl, Ethyl, (2,2)Difluorethyl oder (2,2,2)Trifluorethyl steht, und
R¹ und R³ zusammen mit den Atomen, an die sie gebunden sind, für eine der folgenden Gruppen stehen 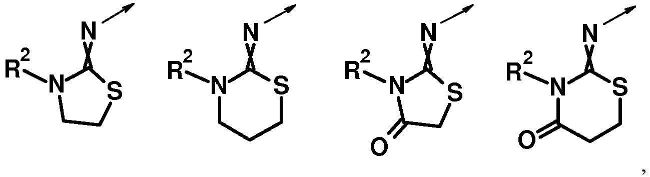 wobei der Pfeil zum Rest des Moleküls zeigt.

4. Verwendung nach einem der Ansprüche 1 bis 3, **dadurch gekennzeichnet, dass** es sich bei der Verbindung der Formel (I) um dessen R-Enantiomer bezogen auf das chirale Schwefelatom handelt, oder um eine Mischung des R-Enantiomers und des S-Enantiomers, in welcher der Anteil des R-Enantiomers mindestens 55 Gew.-% beträgt, bezogen auf das Enantiomerengemisch.

5. Verwendung nach einem der Ansprüche 1 bis 3, **dadurch gekennzeichnet, dass** es sich bei der Verbindung der Formel (I) um dessen S-Enantiomer bezogen auf das chirale Schwefelatom handelt, oder um eine Mischung des S-Enantiomers und des R-Enantiomers, in welcher der Anteil des S-Enantiomers mindestens 55 Gew.-% beträgt, bezogen auf das Enantiomerengemisch.

6. Verwendung nach einem der Ansprüche 1 bis 5, wobei die zu behandelnde Pflanze in einem artifiziellen Wachstumssubstrat angezogen wird.

7. Verwendung nach einem der Ansprüche 1 bis 6, wobei die zu behandelnde Pflanze in einem geschlossenen System gepflanzt ist.

8. Verwendung nach einem der Ansprüche 1 bis 7, wobei die zu behandelnden Pflanzen ausgewählt sind aus der Gruppe bestehend aus
Gemüse, insbesondere Fruchtgemüse oder Blütenstände, insbesondere Paprika, Peperoni, Tomaten, Auberginen, Gurken, Kürbisse, Zucchini, Ackerbohnen, Stangenbohnen, Buschbohnen, Erbsen, Artischocken, Mais;
Blattgemüse, insbesondere Kopfsalat, Chicoree, Endivien, Kressen, Rauken, Feldsalat, Eisbergsalat, Lauch, Spinat, Mangold;
Knollen-, Wurzel- oder Stengelgemüse, insbesondere Sellerie, Rote Beete, Möhren, Radieschen, Meerrettich, Schwarzwurzeln, Spargel, Speiserüben, Palmsprossen, Bambussprossen;
Zwiebelgemüse, insbesondere Zwiebeln, Lauch, Fenchel, Knoblauch;
Kohlgemüse, insbesondere Blumenkohl, Broccoli, Kohlrabi, Rotkohl, Weißkohl, Grünkohl, Wirsing, Rosenkohl, Chinakohl;
Zitrus, insbesondere Orangen, Grapefruits, Mandarinen, Zitronen, Limetten, Bitterorangen, Kumquats, Satsumas;
Kernobst, insbesondere Äpfel, Birnen oder Quitten;
Steinobst, insbesondere Pfirsiche, Nektarinen, Kirschen, Pflaumen, Zwetschgen, Aprikosen, Mandel, Pistazien, Oliven;
Wein, Hopfen, Tee oder tropische Kulturen, insbesondere Mangos, Papayas, Feigen, Ananas, Datteln, Bananen, Durians (Stinkfrüchte), Kakis, Kokosnüsse, Kakao, Kaffee, Avocados, Litschies, Maracujas, Guaven;
Mandeln oder Nüsse, insbesondere Haselnüsse, Walnüsse, Pistazien, Cashewnüsse, Paranüsse, Pekannüsse, Butternüsse, Kastanien, Hickorynüsse, Macadamiannüsse, Erdnüsse;
Beerenfrüchte, insbesondere Johannisbeeren, Stachelbeeren, Himbeeren, Brombeeren, Heidelbeeren, Erdbeeren, Preiselbeeren, Kiwis, Cranberries;
Schnittblumen, insbesondere Rosen, Nelken, Gerbera, Lilien, Margeriten, Chrysanthemen, Tulpen, Narzissen, Anemonen, Mohn, Amyrillis, Dahlien, Azaleen, Malven;
Beetpflanzen, Topfpflanzen oder Stauden, insbesondere Rosen, Tagetes, Stiefmütterchen, Geranien, Fuchsien, Hibiscus, Chrysanthemen, Fleißige Lieschen, Alpenveilchen, Ursambaraveilchen, Sonnenblumen, Begonien;
Sträucher oder Koniferen, insbesondere Ficus, Rhododendron, Fichten, Tannen, Kiefern, Eiben, Wacholder, Pinien, Oleander;
Gewürzen, insbesondere Anis, Chilli, Paprika, Pfeffer, Vanille, Majoran, Thymian, Gewürznelken, Wacholderbeeren, Zimt, Estragon, Koryander, Safran, Ingwer;
Baumwolle;
Soja.

## Claims

1. Use of N-arylamidine-substituted trifluoroethyl sulphoxide derivatives of the formula (I) 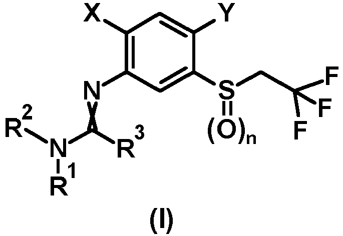 where
n represents the number 1,
X and Y represent the following combinations X/Y: Cl/Cl, F/Cl, Br/Br, Br/Cl, Cl/Br, F/Br, methyl/methyl, F/methyl, methyl/Cl, Cl/methyl or H/trifluoromethyl,
R² represents hydrogen, methyl, ethyl, (2,2)-difluoroethyl or (2,2,2)-trifluoroethyl, and
R¹ and R³ together with the atoms to which they are attached represent one of the groups below 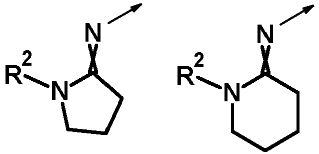 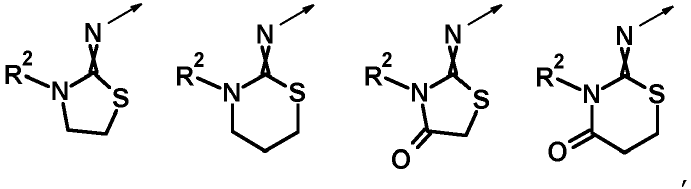
where the arrow points to the remainder of the molecule,
for controlling spider mites by drenching the soil, by drip application to the soil, by immersing roots, tubers or bulbs or by soil injection.

2. Use according to Claim 1 **characterized in that**
n represents the number 1,
X and Y represent the following combinations X/Y: Cl/Cl, F/Cl, Br/Br, Br/Cl, Cl/Br, F/Br, methyl/methyl, F/methyl, methyl/Cl, Cl/methyl or H/trifluoromethyl,
R² represents hydrogen, methyl, ethyl, (2,2)-difluoroethyl or (2,2,2)-trifluoroethyl, and
R¹ and R³ together with the atoms to which they are attached represent one of the groups below 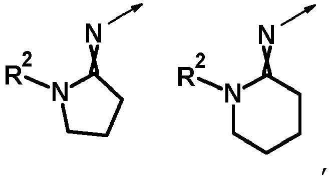 where the arrow points to the remainder of the molecule.

3. Use according to Claim 1, **characterized in that**
n represents the number 1,
X and Y represent the following combinations X/Y: Cl/Cl, F/Cl, Br/Br, Br/Cl, Cl/Br, F/Br, methyl/methyl, F/methyl, methyl/Cl, Cl/methyl or H/trifluoromethyl,
R² represents hydrogen, methyl, ethyl, (2,2)-difluoroethyl or (2,2,2)-trifluoroethyl, and
R¹ and R³ together with the atoms to which they are attached represent one of the groups below 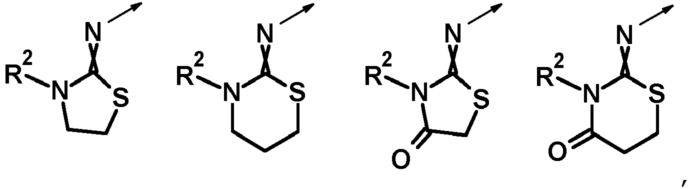 where the arrow points to the remainder of the molecule.

4. Use according to any of Claims 1 to 3, **characterized in that** the compound of the formula (I) is its R enantiomer, with respect to the chiral sulphur atom, or is a mixture of the R enantiomer and the S enantiomer in which the proportion of the R enantiomer is at least 55% by weight, based on the enantiomer mixture.

5. Use according to any of Claims 1 to 3, **characterized in that** the compound of the formula (I) is its S enantiomer, with respect to the chiral sulphur atom, or is a mixture of the S enantiomer and the R enantiomer in which the proportion of the S enantiomer is at least 55% by weight, based on the enantiomer mixture.

6. Use according to any of Claims 1 to 5, where the plant to be treated is grown in an artificial growth substrate.

7. Use according to any of Claims 1 to 6, where the plant to be treated is planted in a closed system.

8. Use according to any of Claims 1 to 7, where the plants to be treated are selected from the group consisting of
vegetables, in particular fruiting vegetables or inflorescences, especially bell peppers, chillies, tomatoes, aubergines, cucumbers, pumpkins, courgettes, broad beans, runner beans, dwarf beans, peas, artichokes, maize;
leafy vegetables, in particular head-forming lettuce, chicory, endives, various types of cress, rocket, lamb's lettuce, iceberg lettuce, leeks, spinach, Swiss chard;
tuber, root or stem vegetables, in particular celeriac/celery, beetroot, carrots, radishes, horseradish, beets for human consumption scorzonera, asparagus, palm shoots, bamboo shoots; bulb vegetables, in particular onions, leek, fennel, garlic;
Brassica vegetables, in particular cauliflower, broccoli, kohlrabi, red cabbage, white cabbage, curly kale, Savoy cabbage, Brussel sprouts, Chinese cabbage;
citrus, in particular oranges, grapefruits, tangerines, lemons, limes, Seville oranges, kumquats, satsumas;
pome fruit, in particular apples, pears or quinces; stone fruit, in particular peaches, nectarines, cherries, plums, quetsch, apricots, almonds, pistachios, olives;
grapevines, hops, tea or tropical crops, in particular mangoes, papayas, figs, pineapples, dates, bananas, durians, kaki fruit, coconuts, cacao, coffee, avocados, lychees, maracujas, guavas,
almonds or nuts, in particular hazelnuts, walnuts, pistachios, cashew nuts, para nuts, pecan nuts, butternuts, chestnuts, hickory nuts, macadamia nuts, peanuts;
soft fruit, in particular redcurrants, gooseberries, raspberries, blackberries, blueberries, strawberries, cranberries, including American cranberries, kiwi fruit;
cut flowers, in particular roses, carnations, gerbera, lilies, marguerites, chrysanthemums, tulips, narcissi, anemones, poppies, amaryllis, dahlias, azaleas, mauves;
bedding plants, pot plants or perennials, in particular roses, Tagetes, violas, geraniums, fuchsias, hibiscus, chrysanthemums, busy lizzies, cyclamen, African violet, sunflowers, begonias; bushes or conifers, in particular ficus, rhododendron, firs, spruces, pines, including umbrella pines, yews, juniper, oleander;
spices, in particular aniseed, chilli pepper, paprika, pepper, vanilla, majoram, thyme, cloves, juniper berries, cinnamon, tarragon, coriander, saffron, ginger;
cotton;
soya beans.

## Revendications

1. Utilisation de dérivés de trifluoroéthylsulfoxyde à substitution *N*-arylamidine de formule (I) 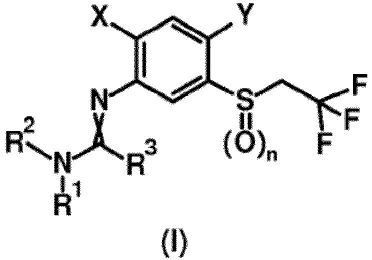 dans laquelle
n représente le nombre 1,
X et Y représentent les combinaisons X/Y suivantes : Cl/Cl, F/Cl, Br/Br, Br/Cl, Cl/Br, F/Br, méthyle/méthyle, F/méthyle, méthyle/Cl, Cl/méthyle ou H/trifluorométhyle,
R² représente hydrogène, méthyle, éthyle, (2,2)-difluoroéthyle ou (2,2,2)-trifluoroéthyle, et
R¹ et R³ représentent ensemble avec les atomes auxquels ils sont reliés un des groupes suivants : 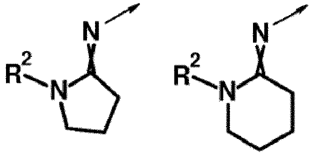 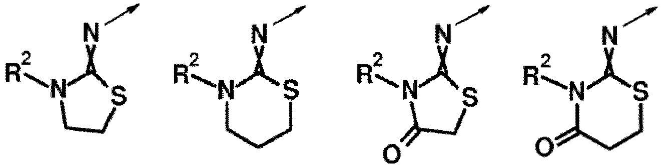
dans lesquels la flèche indique le reste de la molécule,
pour lutter contre les acariens par arrosage sur le sol, par application de gouttelettes sur le sol, par immersion de racines, de tubercules ou de bulbes, ou par injection dans le sol.

2. Utilisation selon la revendication 1, **caractérisée en ce que**
n représente le nombre 1,
X et Y représentent les combinaisons X/Y suivantes : Cl/Cl, F/Cl, Br/Br, Br/Cl, Cl/Br, F/Br, méthyle/méthyle, F/méthyle, méthyle/Cl, Cl/méthyle ou H/trifluorométhyle,
R² représente hydrogène, méthyle, éthyle, (2,2)-difluoroéthyle ou (2,2,2)-trifluoroéthyle, et
R¹ et R³ représentent ensemble avec les atomes auxquels ils sont reliés un des groupes suivants : 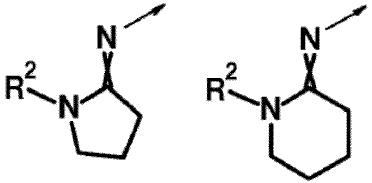 dans lesquels la flèche indique le reste de la molécule.

3. Utilisation selon la revendication 1, **caractérisée en ce que**
n représente le nombre 1,
X et Y représentent les combinaisons X/Y suivantes : Cl/Cl, F/Cl, Br/Br, Br/Cl, Cl/Br, F/Br, méthyle/méthyle, F/méthyle, méthyle/Cl, Cl/méthyle ou H/trifluorométhyle,
R² représente hydrogène, méthyle, éthyle, (2,2)-difluoroéthyle ou (2,2,2)-trifluoroéthyle, et
R¹ et R³ représentent ensemble avec les atomes auxquels ils sont reliés un des groupes suivants : 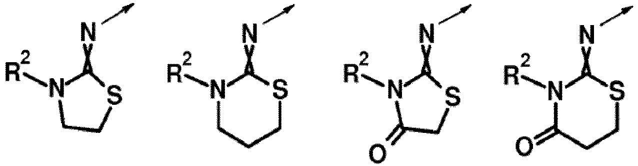 dans lesquels la flèche indique le reste de la molécule.

4. Utilisation selon l'une quelconque des revendications 1 à 3, **caractérisée en ce que** le composé de formule (I) consiste en son énantiomère R par rapport à l'atome de soufre chiral, ou en un mélange de l'énantiomère R et de l'énantiomère S, dans lequel la proportion de l'énantiomère R est d'au moins 55 % en poids, par rapport au mélange d'énantiomères.

5. Utilisation selon l'une quelconque des revendications 1 à 3, **caractérisée en ce que** le composé de formule (I) consiste en son énantiomère S par rapport à l'atome de soufre chiral, ou en un mélange de l'énantiomère S et de l'énantiomère R, dans lequel la proportion de l'énantiomère S est d'au moins 55 % en poids, par rapport au mélange d'énantiomères.

6. Utilisation selon l'une quelconque des revendications 1 à 5, dans laquelle la plante à traiter est placée dans un substrat de croissance artificiel.

7. Utilisation selon l'une quelconque des revendications 1 à 6, dans laquelle la plante à traiter est plantée dans un système fermé.

8. Utilisation selon l'une quelconque des revendications 1 à 7, dans laquelle la plante à traiter est choisie dans le groupe constitué par :
les légumes, notamment les légumes fruits ou les inflorescences, notamment les poivrons, les piments, les tomates, les aubergines, les concombres, les courges, les courgettes, les fèves, les haricots verts, les haricots nains, les pois, les artichauts, le maïs ; les légumes feuilles, notamment les laitues pommées, les chicorés, les endives, le cresson, la roquette, la mâche, les laitues iceberg, les poireaux, les épinards, les bettes ;
les légumes tubercules, racines ou tiges, notamment le céleri, les betteraves rouges, les carottes, les radis, le raifort, les salsifis, les asperges, les navets, les pousses de palmier, les pousses de bambou ;
les légumes bulbes, notamment les oignons, les poireaux, le fenouil, l'ail ;
les brassicées, notamment le chou-fleur, le brocoli, le chou-rave, le chou rouge, le chou blanc, le chou vert, le chou frisé, le chou de Bruxelles, le chou chinois ;
les agrumes, notamment les oranges, les pamplemousses, les mandarines, les citrons, les citrons verts, les oranges amères, les kumquats, les satsumas ;
les fruits à pépins, notamment les pommes, les poires ou les coings ;
les fruits à noyau, notamment les pêches, les nectarines, les cerises, les prunes, les quetsches, les abricots, les amandes, les pistaches, les olives ;
la vigne, le houblon, le thé ou les cultures tropicales, notamment les mangues, les papayes, les figues, les ananas, les dattes, les bananes, les durians (fruit qui pue), les kakis, les noix de coco, le cacao, le café, les avocats, les litchis, les fruits de la passion, les goyaves ;
les amandes ou les fruits à coque, notamment les noisettes, les noix, les pistaches, les noix de cajou,
les noix du Brésil, les noix de pécan, les noix cendrées, les châtaignes, les noix piquées, les noix de macadamia, les cacahuètes ;
les baies, notamment les groseilles, les groseilles à maquereau, les framboises, les mûres, les myrtilles, les fraises, les airelles, les kiwis, les canneberges ;
les fleurs coupées, notamment les roses, les oeillets, les gerberas, les lys, les marguerites, les chrysanthèmes, les tulipes, les narcisses, les anémones, les coquelicots, les amaryllis, les dahlias, les azalées, les mauves ;
les plantes à massif, les plantes en pot ou les plantes vivaces, notamment les roses, les tagètes, les violettes, les géraniums, les fuschias, les hibiscus,
les chrysanthèmes, les impatientes, les cyclamens, les violettes africaines, les tournesols, les bégonias ;
les arbustes ou les conifères, notamment les ficus, les rhododendrons, les épicéas, les sapins, les pins, les ifs, les genévriers, les pins parasols, les oléandres ;
les épices, notamment l'anis, le piment, le paprika, le poivre, la vanille, la marjolaine, le thym, les clous de girofle, les baies de genévrier, la cannelle, l'estragon, le coriandre, le safran, le gingembre ;
le coton ;
le soja.
